# EUROPÄISCHE PATENTSCHRIFT

(11) **EP 1 037 768 B1**
(45) Veröffentlichungstag und Bekanntmachung des Hinweises auf die Patenterteilung: **27.04.2005**
(21) Anmeldenummer: 99936289.0
(22) Anmeldetag: 20.05.1999
(51) Int. Cl.: B60R 16/02, B60T 8/00

(54) **SYSTEM ZUR STEUERUNG DER BEWEGUNG EINES FAHRZEUGS**
SYSTEM FOR CONTROLLING THE DISPLACEMENT OF A MOTOR VEHICLE
SYSTEME POUR COMMANDER LE DEPLACEMENT D'UN VEHICULE

(30) Priorität: 24.08.1998 DE 19838336
(43) Veröffentlichungstag der Anmeldung: 27.09.2000
(73) Patentinhaber: ROBERT BOSCH GMBH, 70442 Stuttgart (DE)
(72) Erfinder: FOLKE, Reiner, D-70806 Kornwestheim (DE); BRACHERT, Jost, D-71254 Ditzingen (DE); VOLKART, Asmus, D-74321 Bietigheim-Bissingen (DE); IRION, Albrecht, D-70563 Stuttgart (DE); FIEDLER, Jens, D-71665 Vaihingen-Riet (DE); MAIER-LANDGREBE, Rolf, D-71394 Kernen (DE); SCHUBERT, Michael, D-75382 Althengstett (DE)
(86) Internationale Anmeldenummer: PCT/DE1999/001510
(87) Internationale Veröffentlichungsnummer: WO 2000/010837

(56) Entgegenhaltungen:
- DE-A- 19 637 209
- DE-A- 19 709 318
- US-A- 5 351 776
- KIENCKE U ET AL: "OPEN SYSTEMS AND INTERFACES FOR DISTRIBUTED ELECTRONICS IN CARS (OSEK)" SAE TECHNICAL PAPER SERIES,US,WARRENDALE, PA, Seite 71-78 XP002062366
- TORSTEN BERTRAM: "cartronic an open architecture for networking the control systems of an automobile " SAE TECHNICAL PAPERS,1998, Seite 34 XP002122466 warrendale

## Beschreibung

### Stand der Technik

Die Erfindung betrifft ein System zur Steuerung der Bewegung eines Fahrzeugs.

Die US-A-5 351 776 zeigt ein unidirektionales, streng hierarchisches System zur Steuerung der Bewegung eines Fahrzeugs mit einem festgelegten Befehlsweg eben in einer Richtung. Durch die spezielle Komponentenaufteilung und die festgelegten unidirektionalen Befehlswege erweist sich das System dieses Standes der Technik zum einen als nicht optimal flexibel und zum anderen können manche Kommunikationsbeziehungen zwischen Komponenten nicht realisiert werden. Eine Weiterentwicklung stellt der nachfolgende Stand der Technik in Form eines Steuerungssystems dar.

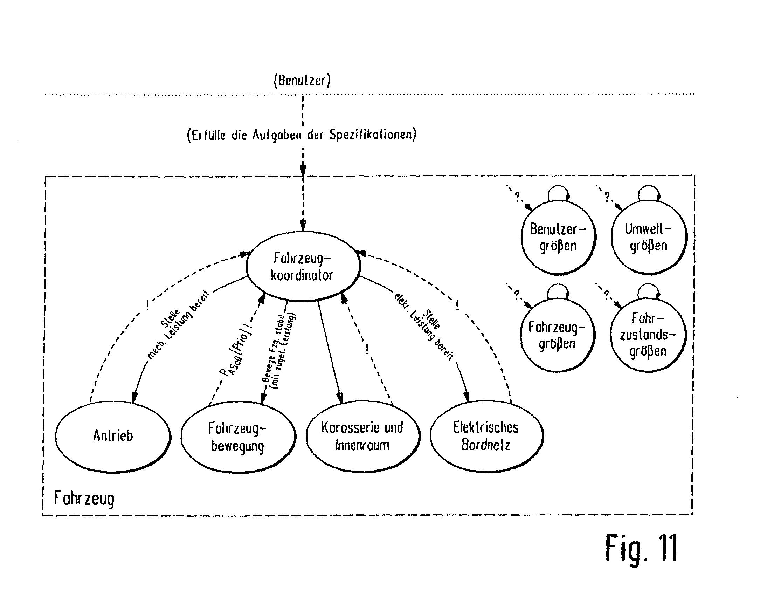

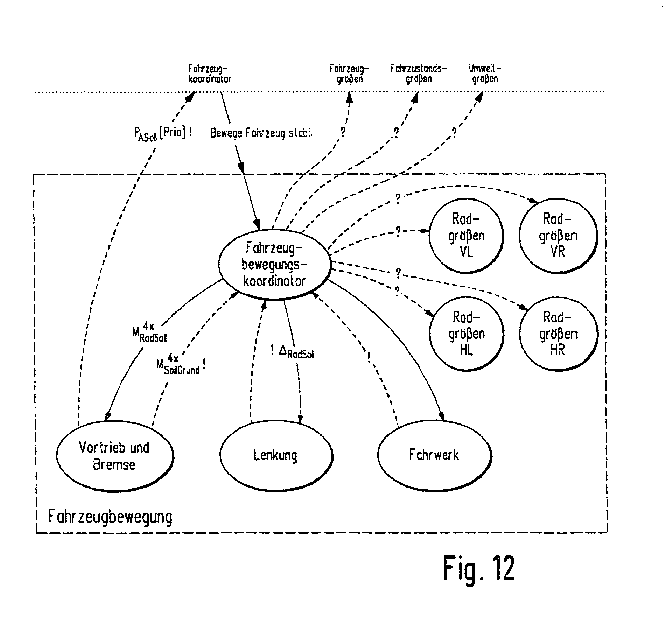

Aus dem SAE-Paper 980200 "Cartronic - An Open Architecture for Networking the Control Systems of an Automobile" von Torsten Bertram, Rainer Bitzer, Rainer Mayer und Asmus Volkart (23 bis 26.02.1998) ist ein Steuerungssystem für ein Gesamtfahrzeug bekannt, bei welchem die einzelnen Komponenten oder Objekte der Fahrzeugsteuerung im Rahmen einer vorgegebenen Struktur mit vorgegebenen Kommunikationsbeziehungen angeordnet sind. Die Struktur weist dabei verschiedene Detaillierungsebenen auf, deren oberste Ebene aus den Komponenten Fahrzeugkoordinator, Steuerung für den Antrieb, für die Fahrzeugbewegung, für Karosserie/Innenraum sowie für das elektrische Bordnetz besteht. Diese oberste Detaillierungsebene ist in Figur 11 dargestellt. Die jeweiligen Komponenten sind in weiteren untergeordneten Ebenen detailliert, wie in Figur 12 am Beispiel der Komponente Fahrzeugbewegung dargestellt ist. Diese Komponente besteht in einer ersten Detail lierungsebene aus einem Koordinator für die Fahrzeugbewegung, Steuerungen für Vortrieb und Bremse, für die Lenkung und für das Fahrwerk.

Zur Steuerung des Fahrzeugs kommunizieren die einzelnen Komponenten miteinander im Rahmen fest vorgegebener Kommunikationsbeziehungen. Diese umfassen Aufträge, Rückmeldungen, Abfragen und Anforderungen. Über die Kommunikationsbeziehung Auftrag werden vom Auftraggeber an die empfangende Komponente Sollgrößen zur Einstellung übermittelt. Ist die beauftragte Komponente nicht in der Lage, den Auftrag zu erfüllen, wird eine Rückmeldung, die gegebenenfalls mit den Gründen dafür versehen ist, zurückgesandt. In den Figuren sind Aufträge als durchgezogene Pfeile mit Ausrufezeichen dargestellt. Zur Erfassung von Informationen, wie beispielsweise Meßgrößen, dient die Kommunikationsbeziehung Abfrage. Bei Abfragen fragt die abfragende Komponente bei der abgefragten Komponente eine Information ab, beispielsweise einen Meßwert. Dies wird in den Figuren durch gestrichelte Pfeile mit einem Fragezeichen symbolisiert. Bei Anforderungen übermittelt die anfordernde Komponente einen Wert an die angeforderte Komponente, der von der angeforderten Komponente eingestellt werden sollte. Dies wird in den Figuren durch gestrichelte Pfeile mit einem Ausrufezeichen symbolisiert. Im Rahmen dieser Kommunikationsbeziehungen erfolgt die Fahrzeugsteuerung mit Hilfe der dargestellten Komponenten sowie der im folgenden beschriebenen Schnittstellendefinitionen.

Die beschriebene Software-Struktur läßt sich auf eine beliebige Hardware-Struktur abbilden und gewährleistet eine optimale Steuerung des Fahrzeugs. Dabei beeinflussen sich die Komponenten nur über wenige exakt definierte Schnittstellen, über die Informationen zu physikalischen Größen übermittelt werden. Eine weitergehende Detaillierung der Komponente Fahrzeugbewegung ist in diesem Stand der Technik nicht dargestellt.

Es ist Aufgabe der Erfindung, eine geeignete Struktur für die Komponente Fahrzeugbewegung anzugeben.

Aus dem SAE-Paper 950759 (27.02. bis 02.03.1995) "VDC, The Vehicle Dynamics Control System of Bosch" von Anton T. van Zanten, Rainer Erhardt und Georg Pfaff ist ein Fahrdynamikregler bekannt, mit dessen Hilfe die Stabilität der Fahrzeugbewegung durch die Vorgabe von Sollmomente an den einzelnen Rädern aufrechterhalten wird.

Aus der nicht vorveröffentlichten deutschen Patentanmeldung DE 197 49 005.0 vom 6.11.1997 ist bekannt, wie eine Fahrdynamikregelung um weitere Regelungseinrichtungen wie Lenkungs- und/oder Fahrwerksaktuatoren erweitert werden kann. Die dort beschriebene Vorrichtung enthält Mittel zur Erfassung von die Fahrzeugbewegung repräsentierenden Größen sowie der Fahrerwünsche. Letztere werden über die Messung von Größen, die der Fahrer über die Fahrzeugbedienelemente einstellt, z.B. Lenkradwinkel, Vordruck oder Bremspedalstellung und Fahrpedalstellung, erfaßt. Ferner enthält die Vorrichtung wenigstens zwei Regelungsvorrichtungen, die mit Hilfe geeigneter Aktuatoren ausgehend von den erfaßten Größen, Regelungseingriffe zur Stabilisierung des Fahrzeuges durchführen. Dabei greift wenigstens eine der Regelungsvorrichtungen in die Lenkung des Fahrzeuges ein. Ferner greift wenigstens eine der Regelungsvorrichtungen in die Bremsen und/oder in den Motor des Fahrzeuges und/oder eine weitere Regelungsvorrichtung in die Fahrwerksaktuatoren ein. Bei den Regelungseingriffen in die Lenkung des Fahrzeuges wird z.B. als Sollwert beispielsweise der vordere Lenkwinkel oder die Änderung des vorderen Lenkwinkels vorgegeben. Dieser Sollwert wird mit Hilfe einer Aktorsteuerung in entsprechende Signale zur Beeinflussung eines Lenkstellers umgesetzt. Zur Durchführung einer Fahrwerkregelung wird vorzugsweise als Sollwert einen Wert für die Dämpferhärte oder für die Federhärte oder einen Wert für das einzustellende Sollniveau vorgegeben. Dieser Sollwert wird mit Hilfe der Aktorsteuerung in entsprechende Signale zur Beeinflussung der Fahrwerksaktuatoren umgesetzt.

### Vorteile der Erfindung

Die nachfolgend beschriebene erfindungsgemäße Lösung, stellt eine geeignete Struktur für die Komponente Fahrzeugbewegung bereit, die auch für diese Komponente die Vorteile des im Stand der Technik beschriebenen Konzeptes insbesondere bezüglich der Komplexitätsreduzierung, der Funktionalität, der Austauschbarkeit von Subsystemen, der Vorteile bei der Entwicklung und der Einbindung neuer sowie bei der Verbesserung bestehender Subsysteme, bezüglich des Zusammenspiels verschiedener Funktionen, etc. erreicht. Auf diese Weise kann in vorteilhafter Weise das komplex vernetzte System zur Steuerung der Fahrzeugbewegung beherrscht werden.

Weitere Vorteile ergeben sich aus der nachfolgenden Beschreibung von Ausführungsbeispielen bzw. den abhängigen Ansprüchen.

### Zeichnung

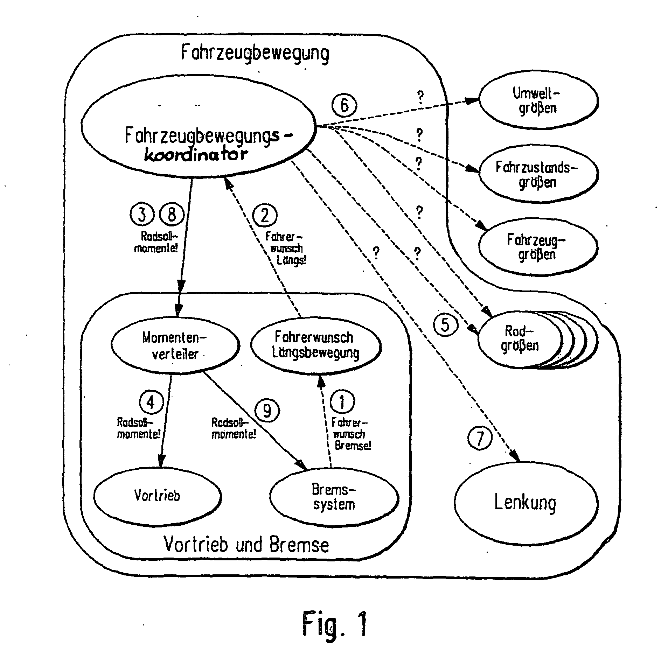

Die Erfindung wird nachstehend anhand der in der Zeichnung dargestellten Ausführungsformen in Figuren 1 bis 12 näher erläutert.

### Beschreibung von Ausführungsbeispielen

In Figur 11 ist die Komponente Fahrzeugbewegung als Teil der obersten Ebene der Fahrzeugstruktur, der Fahrzeugebene, gezeigt.

Die Komponente Fahrzeugbewegung erhält einen Auftrag vom Fahrzeugkoordinator, mit dem Inhalt, das Fahrzeug entsprechend den Fahrervorgaben zu bewegen und dabei die Stabilität der Bewegung zu gewährleisten. Als Randbedingung kann mit diesem Auftrag der Leistungsbetrag angegeben werden, der zum Zweck der Fahrzeugbewegung bereitsteht. Dies wird nötig, wenn die von der Komponente Antrieb, in der Motor, Getriebe, etc. und die entsprechenden Steuerungen angeordnet sind, bereitgestellte Leistung nach unterschiedlichen Prioritäten auf die Komponenten der Fahrzeugebene gemäß der in der Komponente Fahrzeugkoordinator implementierten Strategie verteilt wird (übergeordnetes Leistungsmanagement).

Von der Komponente Fahrzeugbewegung zum Fahrzeugkoordinator (Komponente für die Koordination für die Fahrzeugbewegung geht die Anforderungsbeziehung PASoll[Prio]. Dies bezeichnet die Leistung, die vom Antrieb für Vortriebszwecke bereitgestellt werden müßte. Diese Leistung ist erforderlich um die von der Komponente Vortrieb und Bremse geforderten Radmomente zu realisieren. Der Fahrzeugkoordinator wird aufgrund der als Randbedingung angegebenen Priorität diese Forderung mit konkurrierenden Leistungsforderungen anderer Komponenten koordinieren und die Forderung erfüllen oder wegen anderer, dringenderer Forderungen reduzieren.

Als ein Beispiel für die Schnittstelle zwischen Fahrzeugkoordinator und Antrieb sind dargestellt der Auftrag "Stelle mechanische Leistung bereit" sowie eine vom Antrieb zum Fahrzeugkoordinator führende Anforderungsbeziehung, über die der Antrieb übermittelt, welchen Ressourcenbedarf (z.B. an elektrischer Leistung) er selbst hat, um den genannten Auftrag zu erfüllen. Entsprechend ist die Schnittstelle zwischen Fahrzeugkoordinator und elektrischem Bordnetz für die Bereitstellung elektrischer Leistung ausgestaltet.

Für die Komponenten wichtige Informationen auf der Fahrzeugebene sind die Komponenten Fahrzeuggrößen, Umweltgrößen, Fahrzustandsgrößen und Benutzergrößen. Umweltgrößen beschreiben die Umwelt unabhängig vom Vorhandensein eines Fahrzeuges (z.B. Außentemperatur, Luftdruck, Wind), Fahrzustandsgrößen beinhalten die Interaktion des Fahrzeugs mit der Umwelt (z.B. Abstand zu vorausfahrenden Fahrzeugen, Reibwerte, etc.). Diese Komponenten werden von anderen Komponenten (z.B. der Fahrzeugbewegung) über Abfragebeziehungen zur Informationsbeschaffung abgefragt und die übermittelte Information (z.B. Meßwert) im Rahmen der Funktion der abfragenden Komponente ausgewertet.

In Figur 12 ist eine Detaillierung der Komponente Fahrzeugbewegung dargestellt. Die Aufgabe der Komponente Fahrzeugbewegung ist die Durchführung des Auftrags des Fahrzeugskoordinators, nämlich die Bewegung des Fahrzeugs (oberste logische Ebene) gemäß den Wünschen des Fahrers bei gleichzeitiger Gewährleistung der Fahrstabilität. Dieser allgemeine Auftrag kann verbunden sein mit der konkreten Angabe der für den Fahrzeugvortrieb zur Verfügung stehenden Leistung.

Die zur Steuerung der zur Durchführung des Auftrags im Fahrzeug existierenden Systeme wie Lenkung, Bremse, Vortrieb, etc. sind der Komponente Fahrzeugbewegung zugeordnet.

Die zur Sicherstellung der Stabilität der Fahrzeugbewegung erforderlichen Funktionalitäten wie Fahrdynamikregelung (FDR), Antriebsschlupfregelung (ASR) und Antiblockierregelung (ABS) sind Teil der Komponente Fahrzeugbewegung. Die Komponente Fahrzeugbewegung generiert alle die Fahrzeugbewegung bestimmenden Aktuatoransteuerungen. Als Stellsysteme enthält sie das Bremssystem, den Vortrieb (beide der Längsdynamik), die Lenkung (Querdynamik) und/oder das Fahrwerk (Vertikaldynamik) . Da die Auswirkungen der Stellerbetätigungen in den verschiedenen Freiheitsgraden stark gekoppelt sind, müssen sie innerhalb der Komponente Fahrzeugbewegung koordiniert und in ihrer Wirkung auf die gesamte Fahrzeugbewegung optimiert werden. Weiterhin erfaßt die Komponente Fahrzeugbewegung den die Fahrzeugbewegung betreffenden Fahrerwunsch. Dies geschieht durch Auswerten der Betätigung der entsprechenden Bedienelemente (Pedale, Lenkrad). Die Ermittlung des Fahrerwunsches kann durch Assistenzsysteme ergänzt werden (z.B. Bremsassistent, Hillholder) oder auf Fahreranforderung hin zeitweise vom System übernommen werden (z.B. Fahrgeschwindigkeitsregler, adaptiver Fahrgeschwindigkeitsregler (ACC), etc.).

Um die Stabilität der Fahrzeugbewegung zu überwachen wird die Fahrzeugbewegung beobachtet und bei erkannter Gefahr eingegriffen. Die Art des Eingriffs kann z.B. in Art einer herkömmlichen ABS/ASR- oder FDR-Regelung durchgeführt werden.

Der Auftrag zur stabilen Bewegung entsprechend dem Fahrerwunsch geht vom Fahrzeugkoordinator zur Komponente Fahrzeugbewegung. Von der Fahrzeugbewegung zum Fahrzeugkoordinator geht die Anforderungsbeziehung PASoll[Prio]. Diese geht direkt von der Komponente Vortrieb und Bremse zum Fahrzeugkoordinator.

Die in Figur 12 dargestellte erste Detaillierungsebene der Komponente Fahrzeugbewegung umfaßt einen internen Koordinator, den Fahrzeugbewegungskoordinator, der Empfänger des Auftrags vom Fahrzeugkoordinator ist. Der Fahrzeugbewegungskoordinator beauftragt die zu koordinierenden operativen Komponenten Vortrieb und Bremse, Lenkung und Fahrwerk. Diese repräsentieren die drei Bewegungsfreiheitsgrade des Fahrzeugs, die zur Kontrolle der Gesamtbewegung abgestimmt zu beeinflussen sind. Der Fahrzeugbewegungskoordinator enthält somit alle Komponenten, die die Fahrzeugbewegung unter Berücksichtigung der Kopplung der einzelnen Freiheitsgrade überwachen und steuern bzw. regeln. Hierunter fallen z.B. große Teile einer Fahrdynamikregelung (FDR) bzw. einer Antriebsschlupfregelung (ASR) und Teile eines Antiblockierreglers (ABS), die Auswirkungen auf die Fahrzeugbewegung über die reine Längsdynamik hinaus haben. Dies sind u.a. die für die Fahrzeugsbewegungsregelung und für die Radregelung zuständigen Komponenten, da bereits ein Bremseneingriff an einem einzelnen Rad Einfluß auf die Bewegung in mehreren Freiheitsgraden haben kann.

Vom Fahrzeugbewegungskoordinator zur Komponente Vortrieb und Bremse werden als Auftrag für jedes Rad Sollradmomente MRadSoll übermittelt. Diese werden für jedes Rad nach Maßgabe der im Fahrzeugbewegungskoordinator implementierten Funktionen wie FDR, ABS, ASR, etc. bzw. auf der Basis des Fahrerbremswunsches z.B. nach herkömmlichen Methoden berechnet.
Entsprechende Auftragsbeziehungen sind zwischen dem Fahrzeugbewegungskoordinator und den Komponenten Lenkung und/oder Fahrwerk definiert.

Eine weitere Teilkomponente der Komponente Fahrzeugbewegung ist die Komponente Radgrößen, die es je Rad einmal gibt. Dabei handelt es sich um Informationsgeber, die anderen Komponenten radspezifische Größen auf Abfrage zur Verfügung stellen. In dieser Komponente erfolgt z.B. die Auswertung der Raddrehzahlfühler, die Signalaufbereitung zur Radgeschwindigkeits- und Radbeschleunigungserfassung und/oder die Aufbereitung anderer, radcharakteristischer Größen wie Schlupf, wirksame Kräfte am Rad, Schräglaufwinkel, Radlenkwinkel, usw.. Diese Größen spielen auf der übergeordneten Fahrzeugebene noch keine Rolle, sind für die Fahrzeugbewegung und die hier existierenden Komponenten aber von umfassender Bedeutung. Daher erfolgt die Anordnung der Komponente Radgrößen auf der ersten Detaillierungsebene der Komponente Fahrzeugbewegung. Die einzelnen Komponenten fragen über Abfragekommunikationsbeziehungen die entsprechenden Werte ab. Die Ermittlung dieser Größen erfolgt intern auf der Basis der Auswertung von Sensorik und durch Berechnungen per Algorithmus. Auf welche Weise diese Größen ermittelt werden, bleibt nach außen hin dem Abfragenden verborgen. Der inhärente (nicht von einer anderen Komponente gestellte) Auftrag der Komponente Radgrößen ist die Ermittlung von Radgrößen und die Übermittlung an den Abfrager. Die Abfrage erfolgt von fast allen Komponenten der Komponente Fahrzeugbewegung direkt.

Zwischen der Komponente Fahrzeugbewegungskoordinator und der Komponente Vortrieb und Bremse besteht eine Auftrags- und Anforderungsbeziehung. Der Fahrzeugbewegungskoordinator beauftragt die Komponente Vortrieb und Bremse mit der Realisierung eines Sollmoments MRadSoll an jedem Rad. Die Einstellung dieser Momente führt zur gewünschten Fahrzeugbewegung. Die Komponente Vortrieb und Bremse fordert vom Fahrzeugbewegungskoordinator die Einstellung von Wunschradmomenten MSollGrund.

Dem Fahrer stehen zur Einwirkung auf die Fahrzeugbewegung verschiedene Bedieneinrichtungen zur Verfügung. Dies sind im allgemeinen Fahr- und Bremspedal sowie das Lenkrad. Jedes Bedienelement gehört in der Struktur zu dem Subsystem, zu dessen Betätigung es dient. So wird das Fahrpedal in der weiter unten angegebenen Komponente Vortrieb, das Bremspedal im Bremssystem und das Lenkrad in der Komponente Lenkung angeordnet. Die entsprechenden Meßgrößen werden von diese Meßgrößen verarbeitenden Komponenten im Rahmen von Abfragebeziehungen erfaßt. Innerhalb der Komponente Vortrieb und Bremse erfolgt zusammengefaßt die Erfassung des Fahrerwunsches bezüglich der Längsbewegung. Dieser wird durch die Betätigung des Fahrpedals und des Bremspedals dem System mitgeteilt. Gegebenenfalls können Assistenzsysteme wie FGR, Bremsassistent, ACC, ebenfalls innerhalb der Komponente Vortrieb und Bremse dem Fahrer seine Aufgaben erleichtern und einen alternativen Fahrerwunsch vorgeben. Alle Betätigungen der systemspezifischen Bedienelemente werden innerhalb der Komponente Vortrieb und Bremse zu einer relevanten Längsdynamikforderung zusammengefaßt. Diese wird im Rahmen einer Anforderung als Wunschradmomente MSollGrund an den Fahrzeugbewegungskoordinator übermittelt. Dadurch wird die Realisierung der so ermittelten Fahrervorgaben beim Fahrzeugbewegungskoordinator angefordert. Dieser kontrolliert, ob die Wünsche bei stabiler Fahrt realisierbar sind und gibt im Normalfall den Auftrag zur Realisierung der überprüften Werte zurück an die Komponente Vortrieb und Bremse, ggf. Lenkung und/oder Fahrwerk. Stellt der Fahrzeugbewegungskoordinator durch Abfrage bei der Komponente Radgrößen bzw. bei der Komponente Fahrzeuggrößen allerdings fest, daß die fahrdynamischen Grenzen erreicht sind, ändert er die Wunschgrößen soweit, daß keine kritischen Fahrsituationen eintreten oder setzt die anderen verfügbaren Systeme zur Senkung des Risikos ein. In diesen Fällen unterscheiden sich die geforderten Wunschgrößen von den zu realisierenden Sollgrößen.

Analog erfolgt die Einbeziehung der Komponenten Lenkung und/oder Fahrwerk. Z.B. werden Schnittstellen vorgesehen, wie sie im eingangs genannten Stand der Technik beschrieben sind. So wird in der Komponente Lenkung der Fahrerwunsch durch Betätigung des Lenkrads ausgewertet und eine entsprechende Forderung an den Fahrzeugbewegungskoordinator übermittelt. Dieser übermittelt als Auftrag einen Sollwert δSoll für den Lenkwinkel.

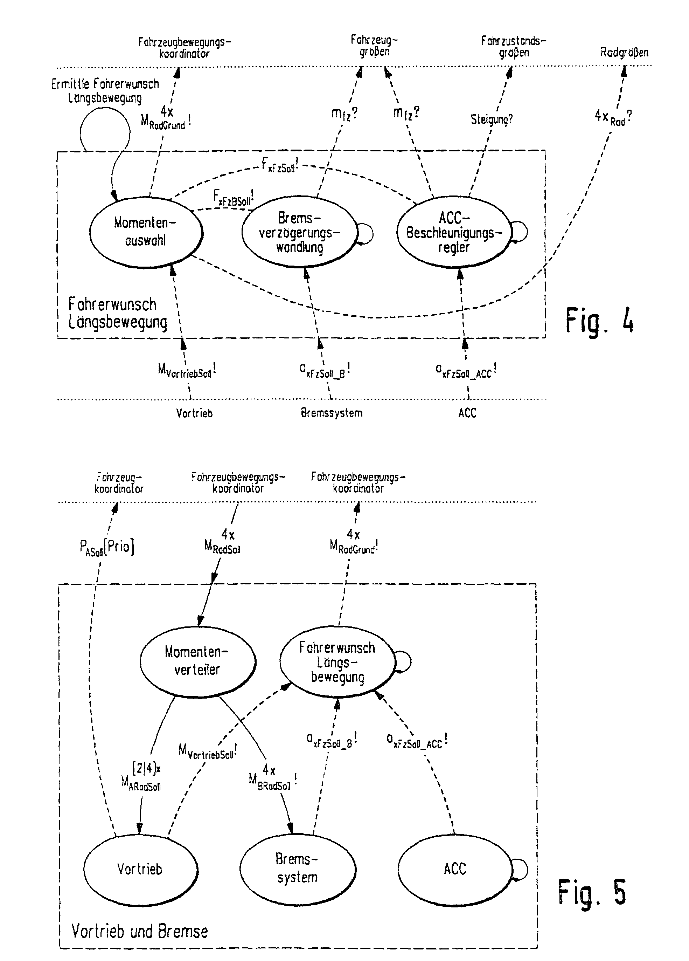

Figur 5 zeigt eine Detaillierung der Komponente Vortrieb und Bremse. Die Komponente Vortrieb und Bremse enthält alle Systeme zur Beeinflussung der Längsdynamik, d. h. zum Beschleunigen und Verzögern. Der Fahrerwunsch betreffend der Längsbewegung wird in dieser Komponente ermittelt aus den Aktionen des Fahrers an den Bedienelementen der relevanten Subsysteme. Weiterhin werden von dieser Komponente die vorgegebenen Sollradmomente realisiert. Dazu sind die direkt oder von Subsystemen angesteuerten Aktuatoren zu verwenden. Die zwischen der Komponente Vortrieb und Bremse und dem Fahrzeugbewegungskoordinator übermittelten Soll- bzw. Wunschmomente betreffen sowohl den Antriebs- als auch den Bremsfall. Ausgehend besteht neben der Anforderungsbeziehung zum Fahrzeugbewegungskoordinator eine Anforderungsbeziehung zum Fahrzeugkoordinator, über die die Leistung, die vom Antrieb für Vortriebszwecke bereitgestellt werden muß, angefordert wird. Diese Leistung ist so bereechnet, daß die von der Komponente Vortrieb und Bremse einzustellenden Radmomente MRadSoll realisiert werden können. Die enthaltenen Komponenten und Subsysteme sind die operativen Systeme Vortrieb und Bremssystem, das Assistenzsystem ACC sowie die koordinierenden Komponenten Momentenverteiler und Fahrerwunschlängsbewegung.

Die Komponente Momentenverteiler stellt die Eingangskomponente der Komponente Vortrieb und Bremse dar. Der Momentenverteiler erhält den externen Auftrag bezüglich der einzustellenden Sollmomente MRadSoll vom Fahrzeugbewegungskoordinator. Dieser Auftrag wird vom Momentenverteiler so aufgeteilt, daß eine koordinierte Ansteuerung der Aktuatoren in den Subsystemen Vortrieb und Bremssystem erfolgt und insgesamt der eingehende Auftrag zur Realisierung von vier vorgegebenen Radmomenten erfüllt wird. Der Momentenverteiler stellt die koordinierte Ansteuerung aller Subsysteme sicher, die das je Rad wirkende Moment direkt beeinflussen. Dies sind Bremsmomente sowie die an dem Radantriebswellen wirkenden Antriebsmomente. Letztere werden bestimmt vom aktuellen Antriebsmoment sowie dessen Verteilung auf die einzelnen Räder durch das Differential. Antrieb und Differential werden angesteuert über die Komponente Vortrieb. Der Momentenverteiler beauftragt demnach Bremssystem und Vortrieb so, daß sich die vom Momentenverteiler zu realisierenden Radmomente einstellen. Gibt es weitere Stellsysteme zur Beeinflussung des Radmoments (z.B. Retarder), werden diese ebenfalls vom Momentenverteiler beauftragt.

Um eine Koordination der Subsysteme zu erreichen, muß der Momentenverteiler die aktuellen Möglichkeiten der Subsysteme kennen. Dazu wird bei der Komponente Vortrieb die im aktuellen Betriebspunkt jeweils maximal oder minimal realisierbaren Momentenwerte erfragt (in Figur 5 nicht dargestellt). Ebenfalls erfragt werden die möglichen Momente unter bestimmten Randbedingungen, um diese Kriterien in die Entscheidung über die Art der Momentenrealisierung miteinzubeziehen. Z.B. kann ein maximales Verzögern über die Schleppwirkung des Motors aus Geräuschgründen im Normalfall vermieden werden, jedoch bei starkem Verschleiß oder hoher Temperatur der Bremsen zu deren Schonung genutzt werden.

Als Kommunikationsbeziehungen des Momentenverteilers bestehen der eingehende Auftrag vom Fahrzeugbewegungskoordinator zur Realisierung der Sollmomentenvorgaben an den Rädern sowie der von ihm ausgehende Auftrag an die Komponente Vortrieb über zwei oder vier (je nach Antriebsart) einzustellende Sollantriebsmomente MARadSoll. Dies entspricht den Momenten an den Radantriebswellen. Diese können sowohl positiv als auch negativ (Motorschlepp) sein. Ferner geht an das Bremssystem der Auftrag über vier einzustellende Bremsmomente MBRadSoll. Diese entsprechen den Momenten, die über die Bremsscheiben bzw. Trommeln erzeugt und abgestützt werden. Diese können nur negativ sein. Ferner erfolgt eine nicht dargestellte Abfrage an den Vortrieb über das im aktuellen Betriebspunkt minimale Vortriebsmoment (d.h. das maximale Schleppmoment) unter bestimmten Randbedingungen. Dieses wird benötigt im Fall negativer Radsollmomentenvorgaben. Negative Radsollmomentenvorgaben können sowohl vom Bremssystem als auch vom Vortrieb realisiert werden, von letzterem aber nur in begrenztem Umfang. Zur Aufteilung des Auftrags auf die Subsysteme ist also das Potential seitens des Vortriebs festzustellen, da dies meist bevorzugt genutzt und nur der verbleibende Anteil vom Bremssystem zu realisieren ist. Unter Randbedingungen ist zu verstehen, daß evtl. weitere, mit dem minimalen Vortriebsmoment zusammenhängende Größen übermittelt werden, wie z.B. sich einstellender Komfort, Geräusch, etc. Damit können diese Kriterien in die Entscheidung über die Wahl der Momentenrealisierung einbezogen werden.

Die Komponente Fahrerwunschlängsbewegung koordiniert die vom Fahrer über die verschiedenen Bedieneinrichtungen vorgegebenen Wunschgrößen gemäß einer vorgegebenen Strategie, die der herkömmlichen Koordination der verschiedenen Betätigungsgrößen entsprechen kann, und leitet diese weiter. Diese Wünsche kommen als Anforderungen von den Komponenten Vortrieb, Bremssystem und ggf. ACC. Die Komponente Fahrerwunschlängsbewegung fragt z.B. bei der Komponente ACC ab, ob das System aktiviert ist. Bestehen keine weiteren Forderungen von den Komponenten Vortrieb und Bremssystem, wird eine Realisierung des ACC-Wunsches (Wunschbeschleunigung axFzSoll_ACC) vom Fahrzeugbewegungskoordinator gefordert. Werden Fahr- oder Bremspedal betätigt, haben deren Wunschgrößen axFzSoll_B und MVortriebSoll üblicherweise Vorrang und der ACC-Wunsch wird übersteuert. Auch Algorithmen zum Systemverhalten bei gleichzeitiger Betätigung von Fahr- und Bremspedal sind in der Komponente Fahrerwunschlängsbewegung anzuordnen. Weiterhin erfolgt dort die Umrechnung der geforderten Beschleunigungen in Momente. Die dabei notwendigen Betriebsgrößen erfaßt die Komponente Fahrerwunschlängsbewegung durch nicht dargestellte Abfragebeziehungen von entsprechenden Informationsgebern. Die Komponente Fahrerwunschlängsbewegung fordert die ermittelten Wunschradmomente vom Fahrzeugbewegungskoordinator an, der sie durch Auftragsvergabe realisiert.

Die Komponente Vortrieb ermittelt ihrerseits die zur Radmomentenrealisierung erforderliche Leistung PASoll[Prio] und fordert deren Bereitstellung vom Fahrzeugkoordinator an. Letzterer stellt das beauftragte Sollmoment durch Auftragsvergabe an die Komponente Antrieb durch Steuerung der Antriebseinheit (Motor, Getriebe, Wandler, etc.) ein.

Die Komponente Bremssystem realisiert die Radbremsmomente durch entsprechende Ansteuerung der vorhandenen Stellglieder, welche je nach eingesetztem Konzept (hydraulisches, pneumatisches oder elektromotorisches Bremssystem) unterschiedlich sein können.

Damit ergibt sich beispielhaft für den Beginn eines ABS-Eingriffs der in Figur 1 dargestellte Ablauf in der beschriebenen Struktur, beispielsweise im Rahmen eines üblichen Fahrdynamikreglers. Zu beachten ist, daß in dieser Darstellung nicht alle Komponenten und Systeme dargestellt sind, sondern aus Gründen der besseren Übersicht nur die am Ablauf beteiligten.

Zunächst fordert das Bremssystem die Realisierung des per Bremspedal eingegebenen Fahrerwunsches (1) an. Die Komponente Fahrerwunschlängsbewegung erkennt den Bremswunsch als relevant und richtet resultierende Forderungen an den Fahrzeugbewegungskoordinator (2). Der Fahrzeugbewegungskoordinator überprüft den Längsdynamikwunsch bezüglich Stabilitätsauswirkungen, erkennt keinen Eingriffsbedarf und beauftragt die Komponente Vortrieb und Bremse mit der Realisierung (3). Der Momentenverteiler beauftragt die Komponenten Vortrieb und/oder Bremssystem mit der Umsetzung der aufgeteilten Radsollmomente (4). Dabei trete an wenigstens einem Rad Blockierneigung auf. Der Fahrzeugbewegungskoordinator erkennt den Regelungsbedarf aus Beobachtung der Komponente Radgrößen (5). Der Fahrzeugbewegungskoordinator ermittelt die Fahrzeugistbewegung (6) sowie die Fahrzeugsollbewegung (7), bestimmt realisierbare Radmomente (Radregelung) und berücksichtigt Auswirkungen der Radmomente auf die Fahrzeugbewegung. Er beauftragt Vortrieb und Bremse mit der Realisierung der angepaßten Radsollmomente (8). Der Momentenverteiler beauftragt dann das Bremssystem mit der Realisierung der gegenüber dem Schritt 4 veränderten Radmomente (9).

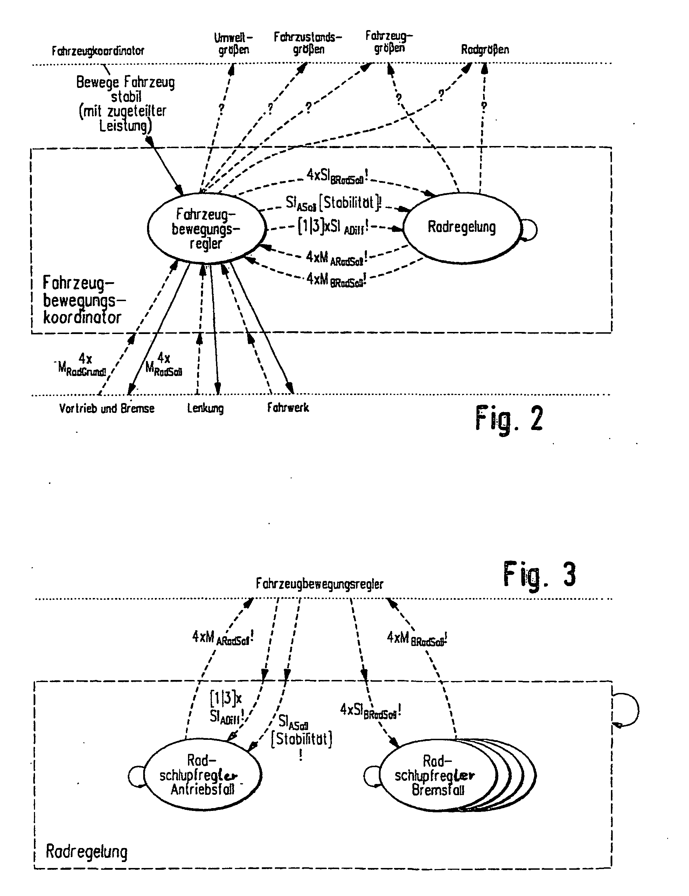

Figur 2 zeigt eine Detaillierung der Komponente Fahrzeugbewegungskoordinator. Dieser stellt die stabile Bewegung des Fahrzeugs sicher. Hierzu koordiniert er die Aufträge an die für die Fahrzeugbewegung relevanten Stellsysteme. Grundlage dieser Aufträge sind die oben dargestellten Anforderungen der unabhängig unterlagerten Systeme, die den Fahrerwunsch enthalten. Zur Überprüfung der stabilen Realisierbarkeit der Fahrerwunschanforderungen wird die Fahrzeugistbewegung beobachtet. Dies geschieht durch Abfragen der Fahrzeug- und Radbewegungsgrößen bei den entsprechenden Komponenten in der übergeordneten Ebene und der Komponente Radgrößen in der gleichen Ebene. Die Bewertung der Stabilität ist Aufgabe des Fahrzeugbewegungskoordinators, ebenso das Einregeln stabiler Bewegungsgrößen. Die Berechnung der Bewegungsgrößen, der Referenzgrößen, etc., die beispielsweise bei heutigen Fahrdynamikregelungen verwendet werden, sind Teil der Komponenten Fahrzeuggrößen bzw. Radgrößen. Die Anteile dieser Regelalgorithmen, die die Fahrzeugbewegung regeln, der Fahrzeug- und der Radregler, sind dem Fahrzeugbewegungskoordinator zugeordnet.

Die Komponente Fahrzeugbewegungskoordinator ist verfeinert in einen Fahrzeugbewegungsregler und eine Radregelung. Die Komponente Radregelung überwacht und regelt den Brems- und Antriebsschlupf an den Rädern. Dies erfolgt auf der Basis abgefragter Informationen der Komponente Radgrößen. Bei der Regelung sind Antriebs- und Bremsfall zu unterscheiden, da die Stellmöglichkeiten unterschiedlich sind. Die Radschlupfregler haben keinen direkten Durchgriff auf die Steller, sondern sie geben ihre radspezifischen Vorgaben an den Fahrzeugbewegungsregler ab. Diese werden dort überprüft in ihrer Wirkung auf die Bewegung des gesamten Fahrzeugs und evtl. modifiziert umgesetzt. Die Radregelung hat die Aufgabe, beispielsweise einen bestimmten Schlupf (wie in Fig. 2 dargestellt; alternativ z.B. Moment, Druck) an jedem Rad einzustellen. Der Sollwert wird intern in der Radregelung erzeugt (Regelung auf das Maximum der µ-Schlupf-Kurve) oder kann vom Fahrzeugbewegungsregler vorgegeben sein. Wenn kein Eingriffsbedarf des Fahrzeugbewegungsreglers besteht, wird dieser Sollwert umgesetzt.

Der Fahrzeugbewegungsregler muß immer die Möglichkeit haben, die Aufteilung der Radkräfte in Längs- und Seitenführungskraft und damit die Bewegung des Fahrzeugs insgesamt zu beeinflussen. Dies geschieht durch eine Beeinflussung der internen Sollwertberechnung des Radschlupfes der Radregelung. Wegen der unterschiedlichen Stellgliedverkopplungen muß dies für Antriebs- und Bremsfall getrennt geschehen. Dies deshalb, weil für den Bremsfall alle vier Räder individuell gebremst werden können, während für den Antriebsfall lediglich die miteinander verkoppelten angetriebenen Räder zur Verfügung stehen. Der Fahrzeugbewegungsregler kann im Bremsfall einzelne Räder über- oder unterbremsen und so ein Unter- oder Übersteuern zur Fahrzeugstabilisierung bewirken. Die hierzu notwendigen Kommunikationsbeziehungen stellen sich wie folgt dar. Vom Fahrzeugkoordinator wird dem Fahrzeugbewegungsregler der Auftrag "bewege Fahrzeug stabil" übermittelt. Der Fahrzeugbewegungsregler bestimmt die zur Realisierung der Fahrzeugsollbewegung erforderlichen Radkräfte und die entsprechenden Schlüpfe an den Rädern. Er sendet als Anforderung an den Radschlupfregler im Bremsfall für jedes Rad den Sollschlupf SlBRadSoll, ebenso im Antriebsfall eine Anforderung SlASoll[Stabilität], die den mittleren Schlupf der Antriebsräder begrenzt. Als Randbedingung kann hierbei ein Stabilitätsmaß angegeben werden, das die Empfindlichkeit der Regelung bestimmt. Ferner wird als Anforderung SlADiff vom Fahrzeugbewegungsregler zur Radregelung die Begrenzung der Schlupfdifferenz der Antriebsräder übermittelt, bei einer Antriebsachse ein Wert, bei Allradantrieb bei Bedarf bis zu drei Werten. Von den Radschlupfreglern wird dem Fahrzeugbewegungsregler als Anforderung MARadSoll, MBRadSoll die Vorgabe eines einzustellenden Sollmoments je Rad im Antriebs- bzw. Bremsfall übermittelt. Die konkrete Vorgehensweise entspricht dabei z.B. der Vorgehensweise bei herkömmlichen Fahrdynamikreglern.

Figur 3 zeigt die Detaillierung der Komponente Radregelung. Diese besteht aus einem Radschlupfregler für den Antriebsfall und einem Radschlupfregler für den Bremsfall, denen die oben genannten Werte übermittelt und von denen die oben genannten Werte ausgehen. Die Radschlupfregler werden dabei in einem bevorzugten Ausführungsbeispiel entsprechend den herkömmlichen Vorgehensweisen bei Fahrdynamikreglern ausgestaltet. Inhärenter Auftrag dieser Komponenten ist die Regelung entsprechend den Sollgrößen.

Die bereits oben dargestellte Komponente Fahrerwunschlängsbewegung ist in einer Detaillierung in Figur 4 skizziert. Diese Komponente Fahrerwunschlängsbewegung koordiniert alle in den Subsystemen generierten Längsbewegungsforderungen. Diese resultieren aus der Betätigung der jeweiligen Bedienelemente, die sich in den Subsystemen befinden. Je nach aktuellem Betriebszustand des Fahrzeugs ermittelt diese Komponente die relevante Forderung und gibt diese Forderung nach außen an den Fahrzeugbewegungskoordinator weiter. Die Anforderungen der Subsysteme erfolgen in fahrzeugbezogenen Größen. Die konsolidierte Forderung an den Fahrzeugbewegungskoordinator wird in Form von Radmomenten ausgegeben. Daher hat die Komponente Fahrerwunschlängsbewegung die weitere Aufgabe, eine geeignete Aufteilung der fahrzeugbezogenen Größen auf die radbezogenen vorzunehmen. Dies erfolgt lediglich im Hinblick auf die gewünschte Fahrzeuglängsdynamik. Diese Aufgabe wird in der Komponente Momentenauswahl durchgeführt. In einem bevorzugten Ausführungsbeispiel erfolgt die Momentenaufteilung auf die Räder in Form einer Grundverteilung,z.B. beim Bremsen 60:40 vorn:hinten, seitenweise gleich, bei Vortrieb gleichmäßig auf die Antriebsräder. Ferner ist in der Komponente Fahrerwunschlängsbewegung ein Algorithmus vorgesehen, der je nach Situation einer Forderung Vorrang einräumt, z.B. ein Übersteuern der ACC-Funktion per Pedal. Die Forderungen einiger Subsysteme erfolgen nicht auf Momentenbasis und müssen gewandelt werden. Dies erfolgt in den Komponenten Bremsverzögerungswandlung und ACC-Beschleunigungsregler. Im Falle des letzteren sind äußere Störungen, wie Steigung, Gefälle, Wind oder Reibwertänderungen zu berücksichtigen.

Inhärent besteht für die Komponente Fahrerwunschlängsbewegung der Auftrag, die Längsbewegungsforderungen zu koordinieren. Von den Komponente Vortrieb besteht die Anforderungsbeziehung bezüglich des geforderten Vortriebsmoments MVortriebSoll, welche aus Fahrpedalstellung oder Assistenzsystem ermittelt wird. Dieses Moment entspricht dem Moment am Getriebeausgang und wird nur für Vortriebszwecke genutzt. Der Teil der Antriebsleistung, der für Nebenaggregate bereitgestellt wurde, ist bereits abgezogen. Diese Anforderung geht direkt zur Komponente Momentenauswahl. Vom Bremssystem kommt die Anforderung über eine geforderte Verzögerung axFzSoll_B auf der Basis der Bremspedalbetätigung. Diese Anforderung geht an die Komponente Bremsverzögerungswandlung. Entsprechend besteht zwischen dem ACC-Beschleunigungsregler und der Komponente ACC die Anforderungsbeziehung bezüglich der geforderten Beschleunigung axFzSoll_ACC (positiv oder negativ) dieses Systems. Hier sind im Gegensatz zur Bremspedalbetätigung äußere Störungen wie Steigung, Gefälle, Wind oder Reibveränderungen noch zu berücksichtigen, weswegen entsprechende Abfragebeziehungen der Komponente ACC-Beschleunigungsregler vorhanden sind. Von der Komponente Fahrerwunschlängsbewegung geht eine Anforderungsbeziehung zum Fahrzeugbewegungskoordinator bezüglich der Vorgabe von vier einzustellenden Radmomenten MRadGrund, die sowohl negativ als auch positiv sein können, aus. Erforderliche Abfragen z.B der Fahrzeugmasse (zur Umrechnung einer Fahrzeugbeschleunigung in eine resultierende Längskraft) an die Komponente Fahrzeuggrößen, z.B. der Steigung (zur Kompensation der resultierenden Fahrwiderstandskraft) an die Komponente Fahrzustandsgrößen, oder z.B. der Radradien (zur Umrechnung der auf das Fahrzeug bezogenen Längskraft in Radmomente) an die Komponente Radgrößen sind in Figur 4 aus Übersichtlichkeitsgründen nicht dargestellt. Ferner sind Anforderungsbeziehungen von der Bremsverzögerungswandlung bzw. dem ACC-Beschleunigungsregler zur Momentenauswahl und bezüglich der einzustellenden Sollkräfte FxFhBSoll, FxFzSoll vorgesehen, die aus den diesen Komponenten zugeführten Wunschgrößen ermittelt wurden.

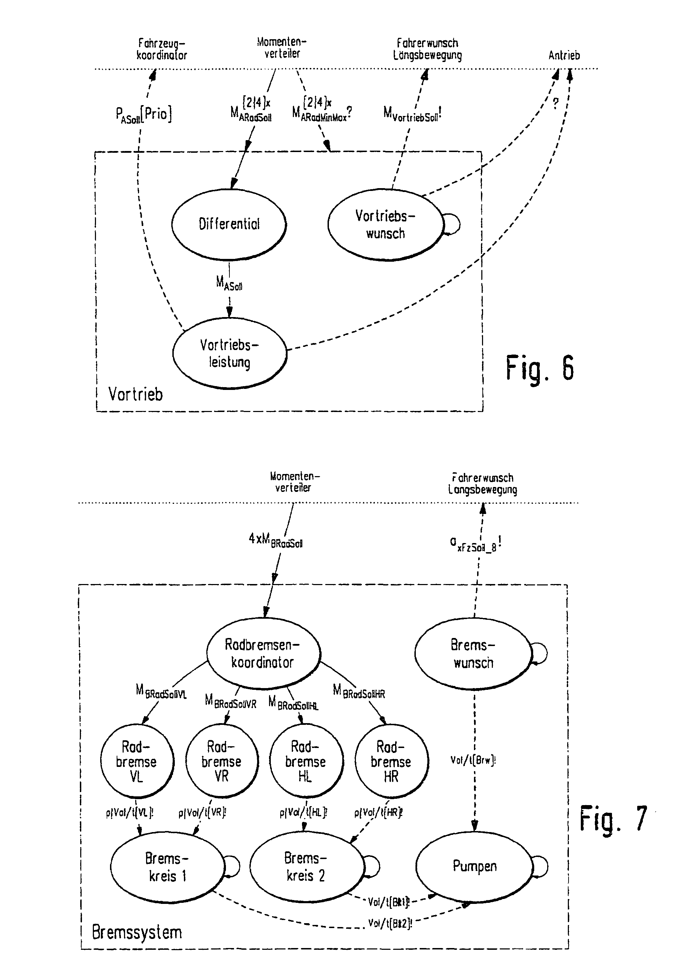

In Figur 6 ist die Komponente Vortrieb detaillierter dargestellt. Sie besteht im wesentlichen aus den Komponenten Differential, Vortriebswunsch und Vortriebsleistung. Dies sind Systeme, die den Vortrieb des Fahrzeugs realisieren.

In der Komponente Vortriebsleistung wird unter Zusammenfassen der zugeführten Radmomente und unter Berechnung einer entsprechenden Leistung am Getriebeausgang die Antriebsleistung PASoll[Prio] ermittelt, die zur Realisierung der Radsollmomente erforderlich ist. Deren Bereitstellung wird für den Vortriebszweck direkt beim übergeordneten Leistungsmanager im Fahrzeugkoordinator angefordert. Dort werden die verschiedenen Anforderungen koordiniert und gegebenenfalls priorisiert. Die Ansteuerung der an der Leistungsbereitstellung beteiligten Stellglieder im Motor, Wandler und Getriebe erfolgt in der Komponente Antrieb außerhalb der Fahrzeugbewegung. Hier sind dann auch andere, konkurrierende Anforderungen z.B. vom Generator zu berücksichtigen.

Die Komponente Vortrieb, dort die Komponente Differential, dient der Umsetzung der vorgegebenen Sollradmomente, die der Komponente vom Momentenverteiler aus zugeführt werden. Diese Momente können positiv oder soweit vom Antrieb realisierbar, negativ sein. Daher sind als Schnittstelle je nach Antriebskonzept zwei oder vier Radmomente vorzusehen. Damit die vorgegebenen Momente auch tatsächlich realisierbar sind, wird für den koordinierenden Momentenverteiler das aktuell verfügbare Minimal- und Maximalmoment je Rad bereitgestellt. Zur Ermittlung der im aktuellen Betriebspunkt möglichen Radmomente wird die Komponente Vortrieb die Komponente Antrieb befragen müssen, die einen entsprechenden Momentenwert ermittelt.

Eine weitere Aufgabe der Komponente Vortrieb ist die Erfassung des Vortriebswunsches des Fahrers. Dies erfolgt durch Interpretation der Fahrpedalbetätigung in der Komponente Vortriebswunsch. Eine entsprechende Anforderung geht von der Komponente Vortriebswunsch zur Komponente Fahrerwunschlängsbewegung. Darüber hinaus kann der Fahrer die Vorgabe des Vortriebswunsches an ein Assistenzsystem übergeben. Dieses übernimmt dann die Formulierung des Fahrerwunsches betreffend den Vortrieb, wie beispielsweise ein Fahrgeschwindigkeitsregler. Betrifft die Vorgabe des Assistenzsystems nicht nur die Aktuatoren des Vortriebs, sondern beispielsweise auch die Bremsen, wie z. B. beim ACC, so ist diese Komponente auf der Strukturebene anzuordnen, in der Vortrieb und Bremssystem koordiniert werden.

Als Kommunikationsbeziehungen wird der Komponente Vortrieb der Auftrag vom Momentenverteiler, der intern an die Komponente Differential weitergegeben wird, über die vorgegebene Radmomente MARadSoll an den Antriebsrädern übertragen. Je nach Antriebskonzept werden zwei oder vier Radmomente vorgegeben. Sie können sowohl negativ als auch positiv sein. Die Kopplung der Radmomente wird vom Differential bestimmt, daher wird intern der äußere Auftrag dorthin weitergeleitet. Ferner findet vom Momentenverteiler eine Abfrage an die Komponente Vortrieb statt bezüglich der aktuell verfügbaren Minimal- und Maximalmomente je Antriebsrad MARadMinMax. Abgehende Kommunikationsbeziehungen der Komponente Vortrieb sind die Anforderung an den Fahrzeugkoordinator bezüglich der Leistung PASoll, die vom Antrieb für Vortriebszwecke bereitgestellt werden muß. Diese Leistung wird von der Komponente Vortriebsleistung berechnet und ausgegeben. Ferner wird eine Anforderung an die Komponente Fahrerwunschlängsbewegung aus der Komponente Vortriebswunsch MVortriebSoll abgegeben, welche das geforderte Moment aus der Fahrpedalstellung oder einem Assistenzsystem ermittelt. Es entspricht dem Moment am Getriebeausgang und wird nur für Vortriebszwecke genutzt. Ferner bestehen diverse Abfragebeziehungen, die von den Komponenten Vortriebsleistung und Vortriebswunsch hervorgehen und zur Bereitstellung der aktuell verfügbaren Minimal- und Maximalmomente je Antriebsrad sowie zur Fahrpedalinterpretation benötigt werden. Die Komponente Differential gibt ferner abhängig von den zugeführten Radsollmomenten ein Sollmoment MASoll als Auftrag an die Vortriebsleistung ab, welche diese zur Anforderung der vom Antrieb einzustellenden Leistung umsetzt.

In Figur 7 ist die Verfeinerung der Komponente Bremssystem dargestellt, beispielhaft für ein hydraulisches Bremssystem. Als Komponenten sind Radbremsenkoordinator, Radbremse vorne links, vorne rechts, hinten links und hinten rechts, der Bremskreis 1, der Bremskreis 2, die Pumpen sowie der Bremswunsch angegeben. Die Komponente Bremssystem enthält die Systeme, die ausschließlich die Verzögerung des Fahrzeugs realisieren oder dieses im Stillstand festhalten. Sie dient zur Umsetzung der vorgegebenen Sollradmomente MBRadSoll, die in diesem Fall nur negativ sein können, d.h. nur verzögernd wirken. Als Schnittstelle zwischen der Komponente Radbremsenkoordinator und den Komponenten Radbremse sind vier Radmomente MBRadSollVL, MBRadSollVR, MBRadSollHL, MBRadSollHR vorgesehen. Voraussetzung zur Einstellung der vorgegebenen Radmomente ist die Möglichkeit zur Modulation der Bremskräfte am Rad. Bei hydraulischen Bremssystemen erfolgt die Modulation durch Druckaufbau- und -abbau, wobei in elektronisch geregelten Bremssystemen die Rückförderpumpe jeweils unterschiedliche Aufgaben erfüllen muß. Um beliebige Abbauten zu ermöglichen, muß die Hydraulikflüssigkeit von der Radbremse wegtransportiert werden, um keinen Gegendruck entstehen zu lassen, unter den der Radbremsdruck nicht abfallen könnte. In elektrohydraulischen Bremsanlagen oder Bremsanlagen mit Antriebschlupfregelung ist für den Bremsmomentenaufbau eine Druckerzeugung erforderlich, was üblicherweise wiederum mit Hilfe einer Pumpe und evtl. einem Speicher erfolgt.

Bei bestimmten Umgebungsbedingungen kann es vorkommen, daß die vorgegebenen Radmomente physikalisch nicht realisierbar sind, z.B. bei niedrigerem Reibwert. Erforderlichenfalls kann dann bezüglich des Auftrags eine entsprechende Rückmeldung erfolgen.

Eine weitere Aufgabe der Komponente Bremssystem ist die Erfassung des Bremswunsches des Fahrers. Diese erfolgt in der Komponente Bremswunsch durch Interpretation der Bremspedalbetätigung. Zur Vorgabe eines situationsgerechten Wunsches benötigt der Fahrer eine Rückmeldung des Systems über die aktuell eingestellte Bremswirkung. Erst dann kann er seinen Bremswunsch sinnvoll dosieren. Dies erfolgt in der Regel durch eine Kombination aus Kraft und Weg am Bremspedal. Hierfür kann beispielsweise die Rückförderpumpe, die durch Zuführen von Hydraulikflüssigkeit in den Hauptbremszylinder am Pedal eine Rückstellkraft aufbaut, oder ein anderes, eine Pedalrückstellkraft simulierendes Element, benutzt werden.

Die Komponente Bremswunsch kann auch Assistenzfunktionen beinhalten, die z.B. nach Art des Bremsassistenten den Gradienten der Bremspedalbetätigung mit einbeziehen. Die Komponente Bremswunsch fordert die Realisierung des ermittelten Bremswunsches von der Komponente Vortrieb und Bremse, dort von der Komponente Fahrerwunschlängsbewegung, an.

Tritt eine Pedalrückwirkung nicht automatisch auf, ist eine Einrichtung vorzusehen, die eine künstlich erzeugte Pedalrückwirkung vornimmt oder den Fahrer vom Eintritt, beispielsweise einer ABS-Funktion durch optische, akustische oder sonstige Warnsignale warnt. Diese Funktion ist Teil der Komponente Bremswunsch.

Die Kommunikationsbeziehungen der Komponente Bremssystem sind einmal als eingehende Kommunikation der Auftrag vom Momentenverteiler an den Radbremsenkoordinator bezüglich der vorgegebenen Radmomente MBRadSoll, die soweit physikalisch möglich einzustellen sind. Von der Komponente Bremswunsch an die Komponente Fahrerwunschlängsbewegung geht die geforderte Verzögerung axFzSoll_B, die aus der Bremspedalstellung ermittelt wird. Vom Radbremsenkoordinator werden die Sollradmomente an die entsprechenden Komponenten Radbremse als Auftrag weitergegeben, die wiederum im Rahmen von Anforderungsbeziehungen bei hydraulischen/pneumatischen Bremsanlagen die Einstellung eines Bremsdrucks p(Vl|Vr|Hl|Hr] oder eines Volumenstroms Vol/t[Vl|Vr|Hl|Hr] von den Komponenten Bremskreis anfordern. Diese wiederum fordern wie die Komponenten Bremswunsch bei der Komponente Pumpen einen Volumenstrom Vol/t[Bk1|Bk2] an. Die Bestimmung der Sollvolumenströme bzw. Solldrücke erfolgt aus den zugeführten Größen nach Maßgabe eines Modells der hydraulischen Bremsanlage.

Die Komponente Bremssystem hat zum Ziel, die Sollmomentenumsetzung in eine Bremskraft am Rad darzustellen. Hierzu sind hydraulische, pneumatische oder elektromotorische Bremsanlagen zur Umsetzung denkbar. In einem Ausführungsbeispiel für elektromotorische Bremsanlagen wird das einzustellende Bremsmoment beispielsweise innerhalb der Komponenten Radbremse direkt in Strom- oder Spannungsgrößen umgesetzt. Die Komponenten Bremskreise sowie Pumpen können ggf. entfallen.

Die in Figur 7 dargestellte Detaillierung der Komponente Bremssystem ist gekennzeichnet durch die folgenden Kommunikationsbeziehungen. Der Radbremsenkoordinator verteilt die zugeführten Aufträge bezüglich der Radsollmomente an die einzelnen Radbremsen, ebenfalls als Auftrag. Im Falle einer hydraulischen Bremsanlage stellen die Radbremsen wiederum an die Bremskreise, welche die je Bremskreis vorhandenen Stellelemente zusammenfassen, Anforderungen bezüglich des einzustellenden Drucks oder des Volumenstroms (p[Vl|Vr|Hl|Hr], Vol/t[Vl|Vr|Hl|Hr]). Von den Bremskreisen zu den Pumpen besteht eine Anforderungsbeziehung, die von den Pumpen die Einstellung eines Volumenstroms (Vol/t[Bk1|Bk2]) anfordern.

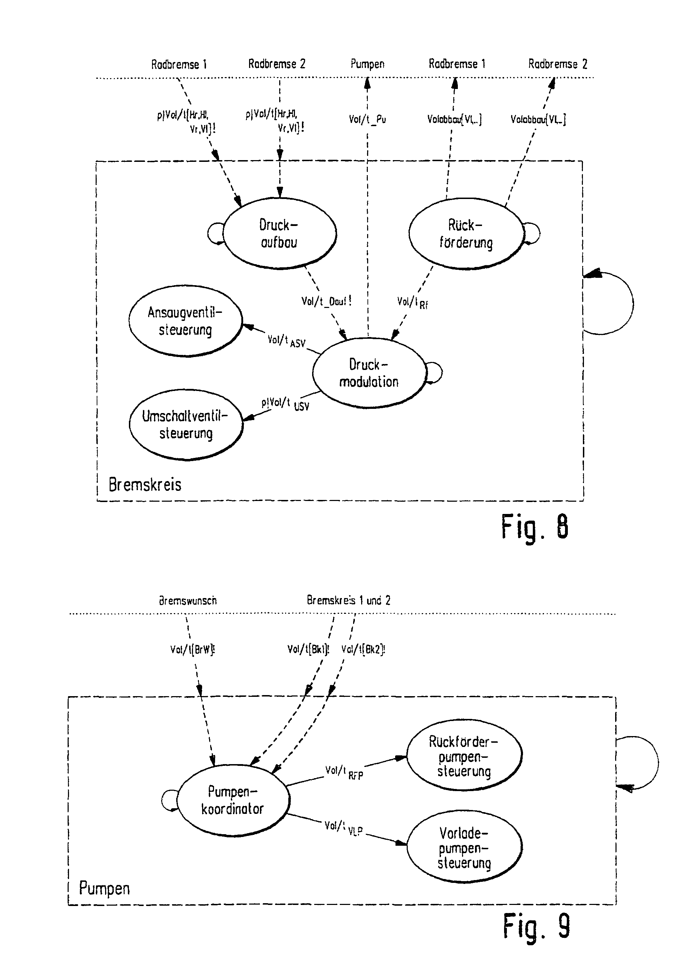

Figur 8 zeigt ein bevorzugtes Ausführungsbeispiel einer Detaillierung einer im Falle einer hydraulischen Bremsanlage vorgesehenen Komponente Bremskreis. Diese Komponente faßt die je Bremskreis vorhandenen Funktionen und Stellglieder zusammen. Im bevorzugten Ausführungsbeispiel eines zweikreisigen Bremssystems ist je Kreis eine Komponente Bremskreis vorgesehen. Diese Komponenten koordinieren die von den jeweils zugehörigen Komponenten Radbremse gestellte Anforderungen betreffend der zu realisierenden Drücke bzw. Volumenströme. Die Modulationsstrategie ist wesentlicher Inhalt der Komponente Bremskreis. Die Erzeugung zusätzlicher benötigter Volumenströme wird von der Komponente Pumpen angefordert. Je nach Modulationsart fordern die Komponenten Radbremse alternativ Drücke oder Volumenströme an.

Die Komponente Bremskreis sorgt dafür, daß den zu einem Kreis zusammengeschlossenen Radbremsen die erforderlichen Hydraulikflüssigkeitsvolumina zu- bzw. abgeführt werden. Benötigen die Komponenten Radbremse zusätzliches Volumen, stellen sie eine Volumenstrom- oder Druckanforderung an die Komponenten Bremskreis. Deren Aufgabe ist es, die unabhängig voneinander gestellten Forderungen der hydraulisch gekoppelten Bremsen zu koordinieren. Die von den Radbremsen eines Kreises abgebauten Volumina sind zu überwachen. Ebenso der Füllungsgrad der Speicherkammer, falls vorhanden. Überschüssige Volumina sind wegzufördern. Ansteuerungen der bremskreisspezifischen Stellglieder (z.B. Ansaugventil, Umschaltventil) sind vorzunehmen und von der Pumpe zu bewegende Volumenströme anzufordern.

Die Kommunikation der Komponente Bremskreis zeigt folgende Beziehungen. Inhärent ist als Auftrag der Komponente Bremskreis die Koordinierung des Volumenstroms bzw. die Druckrealisierung vorgesehen, so daß beide Komponenten Radbremse, die diesem Bremskreis zugeordnet sind, ihre Aufgaben erfüllen können. Als Anforderungen gehen dabei von den entsprechenden Komponenten Radbremse Druck- bzw. Volumenstromsollwerte (p[V1|Vr|Hl|Hr], Vol/t[Vl|Vr|Hl|Hr]) zur Realisierung der Sollradbremsmomente ein, die intern an die Komponente Druckaufbau weitergeleitet werden. Die Komponente Druckaufbau gibt eine resultierende Anforderung vol/t_Dauf bezüglich des Volumenstroms an die Komponente Druckmodulation weiter. Diese Komponente hat als inhärenten Auftrag, diese Anforderung gleichzeitig mit der Volumenstrom-Anforderung der Komponente Rückförderung zu erfüllen. Sie gibt dazu als Anforderung an die Komponente Pumpen den zur Radbremsmomentenrealisierung bereitzustellenden Volumenstrom Vol/t_Pu zu realisieren, und beauftragt die Ventilsteuerungen mit der Einstellung jeweils eines bestimmten Drucks bzw. Volumenstroms. Eine Komponente Rückförderung hat den inhärenten Auftrag, die beim Druckabbau wegzufördernden Volumina zu steuern. Dazu werden über Abfragen an die Radbremskomponenten die abzubauenden Volumina VolAbbau ermittelt, ggf. der Füllungsgrad einer Speicherkammer überwacht, und eine resultierende Anforderung über den einzustellenden Volumenstrom an die Komponente Druckmodulation weitergegeben. Letztere setzt diese Anforderung dann in eine eigene Anforderung an die Komponente Pumpen um.

In Figur 9 schließlich ist die Detaillierung der zum Ausführungsbeispiel einer hydraulischen Bremsanlage gehörenden Komponente Pumpen dargestellt. Diese Komponente umfaßt die Ansteuerung der Hydraulikpumpe(n). Diese bedienen die Anforderungen beider Bremskreise sowie des Bremswunsches bezüglich gewünschter Volumenströme. Bei ABSR-Systemen gibt es nur die Rückförderpumpe, bei Fahrerdynamikregelsystemen gegebenenfalls zusätzlich eine Vorladepumpe. Die Komponente besteht aus Pumpenkoordinator, Rückförderpumpensteuerung und Vorladepumpensteuerung. Der inhärente Auftrag ist, die erforderlichen Hydraulikvolumina zu fördern zur Druckmodulation in den Bremskreisen sowie zur Erzeugung einer Pedalrückwirkung für den Fahrer. Zweck kann zum einen saugseitig ein Druckabbau oder andererseits ein Druckaufbau sein. Für die abgestimmte Ventilansteuerung innerhalb der Bremskreise sorgen die Komponenten Bremskreis selbst. Die Kopplung der Bremskreise wird damit an einer Stelle in der Struktur, nämlich der Komponente Pumpen, berücksichtigt. Um dem Fahrer ein Dosieren des Bremswunsches zu ermöglichen, muß am Bremspedal eine Gegenkraft wirken, ansonsten fiele das Pedal durch. Daher ist Volumen in den Hauptbremszylinder zu fördern.

Figur 9 zeigt als eingehende Kommunikationsbeziehung der Komponente Pumpen die Anforderung von der Komponente Bremswunsch des für die Pedalrückwirkung benötigten Volumenstromes Vol/t_BrW, die Anforderungen der beiden Bremskreiskomponenten den von den Bremskreisen benötigten Volumenstrom Vol/t[Bk1|Bk2] zur Druckmodulation zu realisieren und die Aufträge an die Pumpensteuerungen die einzustellenden Volumenströme gemäß dem inhärent Auftrag, so viel Volumenstrom zu erzeugen, daß die Anforderungen erfüllt werden.

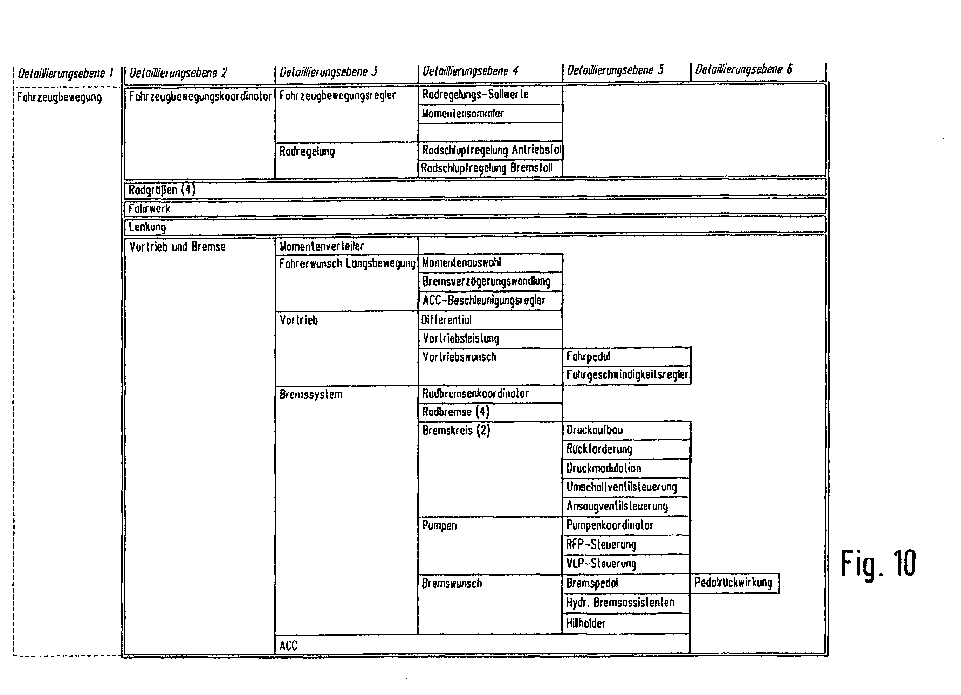

Figur 10 gibt zusammenfassend die unterschiedlichen Komponenten als Tabelle an. Die erste Detaillierungsebene stellt die Komponente Fahrzeugbewegung dar. In der zweiten Detaillierungsebene sind die Komponente Fahrzeugbewegungskoordinator, die Komponente Radgrößen, die Komponente Fahrwerk und Lenkung sowie die Komponente Vortrieb und Bremse enthalten. Die dritte Detaillierungsebene umfaßt im Fahrzeugbewegungskoordinator den Fahrzeugbewegungsregler sowie die Radregelung, in der Komponente Vortrieb und Bremse den Momentenverteiler, die Komponente Fahrerwunschlängsbewegung, die Komponenten Vortrieb und Bremssystem. Die vierte Detaillierungsebene umfaßt bezüglich des Fahrzeugbewegungsreglers Komponenten zur Bildung der Radregelungssollwerte und zum Sammeln der wirkenden Momente, bezüglich der Radregelung die Radschlupfregler für den Antriebsfall und die für den Bremsfall. Die Komponente Fahrerwunschlängsbewegung umfaßt in der Detaillierungsebene 4 die Momentenauswahl, die Bremsverzögerungswandlung und den ACC-Beschleunigungsregler, während in der Detaillierungsebene 4 in bezug auf die Komponente Vortrieb die Komponenten Differential, Vortriebsleistung und Vortriebswunsch angeordnet sind. Letzterer ist in der Detaillierungsebene 5 weiter in Fahrpedal und Fahrgeschwindigkeitsregler verfeinert. Die Komponente Bremssystem ist im Beispiel einer hydraulischen Bremsanlage in der Detaillierungsebene 4 verfeinert in die Komponenten Radbremsenkoordinator, Radbremse, Bremskreis, Pumpen und Bremswunsch. Der Bremskreis ist dabei in der Detaillierungsebene 5 in die Komponenten Druckaufbau, Rückförderung, Druckmodulation, Umschaltventilsteuerung und Ansaugventilsteuerung verfeinert, während die Komponente Pumpen in der Detaillierungsebene 5 in Pumpenkoordinator, Rückförderpumpensteuerung (RFP-Steuerung) und Vorladepumpensteuerung (VLP-Steuerung), wenn vorhanden, verfeinert ist. Bezüglich der Komponente Bremswunsch ist in der Detaillierungsebene 5 die Komponente Bremspedal, Bremsassistent (Hydr. Bremsassistenten) und Hillholder vorgesehen, wobei die Komponente Bremspedal in der Detaillierungsebene 6 noch die Komponente Pedalrückwirkung aufweist.

## Patentansprüche

1. Steuersystem für die Bewegung eines Fahrzeugs umfassend:
- eine oberste logische Ebene zur Steuerung des Fahrzeugs, welche eine Komponente für die Steuerung der Fahrzeugbewegung enthält,
- eine Vielzahl von Detaillierungsebenen, die unter der obersten logischen Ebene liegen, wobei die Komponente für die Steuerung der Fahrzeugbewegung in eine Vielzahl von Komponenten, die in diesen Detaillierungsebenen liegen, aufgeteilt ist,
- wobei in einer ersten Detaillierungsebene unterhalb der obersten logischen Ebene die Komponente für die Steuerung der Fahrzeugbewegung in eine Komponente für die Koordination für die Fahrzeugbewegung und in eine Komponente für die Steuerung von Vortrieb und Bremse aufgeteilt ist,
- wobei in einer zweiten Detaillierungsebene unterhalb der ersten Detaillierungsebene die Komponente für die Steuerung von Vortrieb und Bremse unterteilt ist in eine Komponente zur Steuerung des Vortriebs und in eine Komponente zur Steuerung des Bremssystems,
- wobei die Komponenten auf der Basis vorgegebener Kommunikationsbeziehungen miteinander kommunizieren,
- wobei die Komponente für die Koordination der Fahrzeugbewegung der Komponente für die Steuerung von Vortrieb und Bremse Aufträge bezüglich einzustellender Sollwerte (MRadSoll) gibt, und
- wenigstens eine Komponente wenigstens eine Forderung (MSollGrund) an die Komponente für die Koordination der Fahrzeugbewegung stellt, wobei
- die wenigstens eine Forderung (MSollGrund) bei den Aufträgen bezüglich einzustellender Sollwerte (MRadSoll) berücksichtigt wird, und
- die Komponente für die Steuerung von Vortrieb und Bremse abhängig von diesen einzustellenden Sollwerten (MRadSoll) an die Komponente zur Steuerung des Vortriebs und an die Komponente zur Steuerung des Bremssystems Aufträge bezüglich einzustellender Sollwerte (MARadSoll, MBRadSoll) gibt.

2. System nach Anspruch 1, **dadurch gekennzeichnet, daß** in der Komponente Fahrzeugbewegung an die wenigstens eine Komponente Vortrieb oder Bremssystem Sollwerte für die einzustellenden Radmomente zur Sicherstellung einer stabilen Fahrzeugbewegung übermittelt werden.

3. System nach einem der vorhergehenden Ansprüche, **dadurch gekennzeichnet, daß** die Komponente Fahrzeugbewegung einen Koordinator aufweist, der zur Komponente Vortrieb und Bremse als Kommunikationsbeziehung eine Auftragsbeziehung aufweist, über die Sollradmomente vorgegeben werden und daß zwischen der Komponente Vortrieb und Bremse und dem Koordinator eine Anforderungsbeziehung vorhanden ist, über die Wunschradmomente übertragen werden.

4. System nach einem der vorhergehenden Ansprüche, **dadurch gekennzeichnet, daß** zusätzlich der Komponente Vortrieb und Bremse ein adaptiver Fahrgeschwindigkeitsregler zugeordnet ist.

5. System nach Anspruch 3, **dadurch gekennzeichnet, daß** die Auftragsbeziehung vom Koordinator der Fahrzeugbewegung zu einem Momentenverteiler als Teil der Komponente Vortrieb und Bremse führt und von diesem als Aufträge für die Sollradmomente an die Komponenten Vortrieb und/oder Bremssystem weitergegeben wird.

6. System nach einem der vorhergehenden Ansprüche, **dadurch gekennzeichnet, daß** der Komponente Vortrieb und Bremse eine Komponente Fahrerwunschlängsbewegung zugeordnet ist, welche das Wunschradmoment ermittelt aus den von den Komponenten Vortrieb, Bremssystem und/oder adaptiver Fahrgeschwindigkeitsregler übermittelten Wunschvortriebsmomenten bzw. Wunschbeschleunigungen.

7. System nach einem der vorhergehenden Ansprüche, **dadurch gekennzeichnet, daß** der Fahrzeugbewegungskoordinator einen Fahrzeugbewegungsregler sowie einen Radregler umfaßt.

8. System nach Anspruch 7, **dadurch gekennzeichnet, daß** der Fahrzeugbewegungsregler Sollradmomente als Aufträge an die Komponente Vortrieb und Bremse abgibt, ferner Anforderungen an den Radregler bezüglich des Radschlupfes bzw. der Achsdifferenzdrehzahlen übermittelt und vom Radregler Radsollmomente für den Antriebs- und/oder Bremsfall empfängt.

9. System nach Anspruch 7, **dadurch gekennzeichnet, daß** der Radregler eine Radschlupfregelung für den Antriebsfall und eine Radschlupfregelung für den Bremsfall umfaßt.

10. System nach einem der vorhergehenden Ansprüche, **dadurch gekennzeichnet, daß** die Komponente Vortrieb in einer weiteren Ebene in Differential, Vortriebsleistung und Vortriebswunsch verfeinert ist, wobei die Sollradmomente in eine Solleistung umgesetzt werden, die von der Komponente Vortriebsleistung als Antriebsleistung vom Fahrzeugkoordinator angefordert wird.

11. System nach einem der vorhergehenden Ansprüche, **dadurch gekennzeichnet, daß** die Komponente Bremssystem die Steuerung der Radbremsen auf der Basis der vom Momentenverteiler zugeführten Radsollmomente durchführt.

12. System nach einem der vorhergehenden Ansprüche, **dadurch gekennzeichnet, daß** die Komponente Fahrzeugbewegung eine Komponente Lenkung umfaßt, die zur Komponente Fahrzeugbewegungskoordinator als Kommunikationsbeziehung eine Anforderungsbeziehung bezüglich eines einzustellenden Lenkwunsches aufweist, und vom Koordinator einen Auftrag über die tatsächlich zu realisierende Lenkansteuerung erhält.

13. System nach einem der vorhergehenden Ansprüche, **dadurch gekennzeichnet, daß** die Komponente Fahrzeugbewegung eine Komponente Fahrwerk umfaßt, die zur Komponente Fahrzeugbewegungskoordinator als Kommunikationsbeziehung eine Anforderungsbeziehung bezüglich eines einzustellenden Fahrwerk-Wunschverhaltens aufweist, und vom Koordinator einen Auftrag über die tatsächlich zu realisierende Fahrwerkansteuerung erhält.

## Claims

1. System for controlling the movement of a vehicle comprising:
- a top logic level for controlling the vehicle, which level contains a component for controlling the movement of the vehicle,
- a plurality of detailing levels which are located below the top logic level, wherein the component for controlling the movement of the vehicle is divided into a plurality of components which are located in the detailing levels,
- wherein, in a first detailing level below the top logic level, the component for controlling the movement of the vehicle is divided into a coordination component for the movement of the vehicle and into a component for controlling propulsion and braking,
- wherein, in a second detailing level below the first detailing level, the component for controlling propulsion and braking is subdivided into a component for controlling the propulsion and into a component for controlling the brake system,
- wherein the components communicate with one another on the basis of predefined communication relationships,
- wherein the component for coordinating the movement of the vehicle gives the component for controlling propulsion and braking instructions relating to set point values (MRadSoll) to be set, and
- at least one component makes at least one request (MSollGrund) to the component for coordinating the movement of the vehicle, wherein
- the at least one request (MSollGrund) is taken into account in the instructions relating to set point values (MRadSoll) to be set, and
- the component for controlling propulsion and braking gives instructions relating to set point values (MARadSoll, MBRadSoll), as a function of these set point values (MRadSoll) to be set, to the component for controlling the propulsion and to the component for controlling the brake system.

2. System according to Claim 1, **characterized in that**, in the vehicle movement component, set point values for the wheel torques to be set are transmitted to the at least one propulsion or brake system component in order to ensure a stable movement of the vehicle.

3. System according to one of the preceding claims, **characterized in that** the vehicle movement component has a coordinator which has an instruction relationship with the propulsion and brake component as a communications relationship, via which instruction relationship set point wheel torques are predefined, and **in that** there is an instruction relationship, via which desired wheel torques are transmitted, between the propulsion and brake component and the coordinator.

4. System according to one of the preceding claims, **characterized in that**, in addition to the propulsion and brake component, there is an associated adaptive velocity controller.

5. System according to Claim 3, **characterized in that** the instruction relationship is fed from the coordinator of the vehicle movement to a torque distributor as part of the propulsion and brake component and is passed on from there to the propulsion and/or brake system components as instructions for the set point wheel torques:

6. System according to one of the preceding claims, **characterized in that** the propulsion and brake component has an associated component for longitudinal movement defined by the driver, which component determines the desired wheel torque from the desired propulsion torques or desired acceleration values transferred by the propulsion, brake system and/or adaptive velocity controller components.

7. System according to one of the preceding claims, **characterized in that** the vehicle movement coordinator comprises a vehicle movement controller and a wheel controller.

8. System according to Claim 7, **characterized in that** the vehicle movement controller outputs set point wheel torques as instructions to the propulsion and brake component, and in addition transfers requests to the wheel controller relating to the wheel slip or the axle differential speeds, and receives wheel set point torques for the case of driving and/or braking from the wheel controller.

9. System according to Claim 7, **characterized in that** the wheel controller comprises a wheel slip controller for the case of driving and a wheel slip controller for the case of braking.

10. System according to one of the preceding claims, **characterized in that** the propulsion component is refined, in a further level, into a differential, propulsion power and desired propulsion, the set point wheel torques being converted into a set point power which is requested from the vehicle coordinator by the propulsion power component as a drive power.

11. System according to one of the preceding claims, **characterized in that** the brake system component controls the wheel brakes on the basis of the wheel set point torques fed by the torque distributor.

12. System according to one of the preceding claims, **characterized in that** the vehicle movement component comprises a steering component which has, with the vehicle movement coordinator component, a request relationship, as a communications relationship, relating to a desired steering setting to be set, and receives, from the coordinator, an instruction relating to the steering actuation which is to be actually implemented.

13. System according to one of the preceding claims, **characterized in that** the vehicle movement component comprises a chassis component which has, with the vehicle movement coordinator component, a request relationship, as a communications relationship, relating to a desired chassis behaviour to be set, and receives, from the coordinator, an instruction relating to the chassis actuation which is to be actually implemented.

## Revendications

1. Système pour commander le déplacement d'un véhicule comprenant
- un plan logique supérieur pour commander le véhicule, qui contient une composante pour la commande du mouvement du véhicule,
- une pluralité de plans de détail situés en dessous du plan logique précédent, la composante commandant le mouvement du véhicule étant divisée en une pluralité de composantes se trouvant dans ces plans de détail,
- dans un plan de détail situé en dessous du plan logique supérieur, la composante de commande du mouvement du véhicule est décomposée en une composante pour assurer la coordination du mouvement du véhicule et en une composante pour commander la propulsion et le freinage,
- dans un deuxième plan de détail situé en dessous du premier, la composante pour commander la propulsion et le freinage est divisée en une composante pour commander la propulsion et en une composante pour commander le système de freinage,
- les composantes communiquent entre elles sur la base de liaisons de communication prédéfinies,
- la composante pour la coordination du mouvement du véhicule donne à la composante pour commander la propulsion et le freinage des ordres en ce qui concerne les valeurs de consigne à régler (MRadSoll),
- au moins une composante présente au moins une exigence (MSollGrund) à la composante pour la coordination du mouvement du véhicule,
- la composante (MSollGrund) au nombre d'une au moins est prise en considération dans les ordres concernant les valeurs de consigne à régler (MRadSoll),
- la composante pour la commande de la propulsion et du freinage, en fonction des valeurs de consigne (MRadSoll) à appliquer par la propulsion et le freinage, délivre des ordres à la composante de commande de la propulsion et à la composante de commande du système de freinage, en ce qui concerne les valeurs de consigne à appliquer (MARadSoll, MBRadSoll).

2. Système selon la revendication 1,
**caractérisé en ce que**
dans la composante de mouvement du véhicule, des valeurs de consigne pour les couples de roue à régler sont transmises à l'au moins une composante propulsion ou système de freinage de manière à assurer un mouvement stable du véhicule.

3. Système selon la revendication 1 ou 2,
**caractérisé en ce que**
la composante mouvement du véhicule présente un coordinateur qui comporte, en tant que relation de communication avec la composante propulsion et freinage, une relation d'ordre par laquelle sont prédéfinis les couples de consigne de roue, et entre la composante propulsion et freinage et le coordinateur existe une connexion d'appel par laquelle sont transmis les couples de roue désirés.

4. Système selon une des revendications précédentes,
**caractérisé en ce qu'**
un régulateur adaptatif de vitesse du véhicule est associé de plus à la composante propulsion et freinage.

5. Système selon la revendication 3,
**caractérisé en ce que**
la connexion de commande, en tant que partie de la composante transmission et freinage, va du coordinateur du mouvement du véhicule au répartiteur de couples, et est transmise aux composantes propulsion et/ou système de freins sous forme d'ordres pour les couples de consigne de roues.

6. Système selon une des revendications précédentes,
**caractérisé en ce qu'**
à la composante propulsion et freinage, est associée une composante mouvement longitudinal désiré du véhicule qui détermine le couple de roue désiré à partir des couples de propulsion désirés ou des accélérations désirées transmis à partir des composantes propulsion, système de freins et/ou régulateur adaptatif de vitesse.

7. Système selon une des revendications précédentes,
**caractérisé en ce que**
le coordinateur de mouvement du véhicule comprend un régulateur de mouvement du véhicule ainsi qu'un régulateur de roues.

8. Système selon la revendication 7,
**caractérisé en ce que**
le régulateur de mouvement du véhicule délivre des couples de roue de consigne sous forme d'ordres adressés à la composante propulsion et freinage, il établit de plus des demandes adressées au régulateur de roues concernant le patinage des roues, c'est-à-dire les différences de vitesse de rotation des essieux, et il reçoit du régulateur de roues des couples de consigne de roue dans le cas d'entraînement et/ou de freinage.

9. Système selon la revendication 7,
**caractérisé en ce que**
le régulateur de roues comprend une régulation antipatinage pour le cas d'entraînement et une régulation antipatinage pour le cas de freinage.

10. Système selon une des revendications précédentes,
**caractérisé en ce que**
la composante propulsion est, dans un autre plan, affinée en un différentiel, une puissance de propulsion et un désir de propulsion, les couples de consigne des roue étant transformés en une puissance de consigne qui est demandée par le coordinateur de véhicule à la composante puissance de propulsion en tant que puissance d'entraînement.

11. Système selon une des revendications précédentes,
**caractérisé en ce que**
la composante système de freinage assure la commande des freins de roue sur la base des couples de consigne de roue adressés par le répartiteur de couples.

12. Système selon une des revendications précédentes,
**caractérisé en ce que**
la composante mouvement du véhicule comprend une composante direction qui présente à la composante coordinateur de mouvement de véhicule en tant que relation de communication une relation de demande concernant un désir de direction à satisfaire et reçoit du coordinateur un ordre en ce qui concerne la commande de direction à réaliser effectivement.

13. Système selon une des revendications précédentes,
**caractérisé en ce que**
la composante mouvement du véhicule comprend une composante train roulant qui présente en tant que relation de communication avec la composante coordinateur de mouvement du véhicule une relation de demande en ce qui concerne le comportement du train roulant à régler, et reçoit du coordinateur un ordre en ce qui concerne la commande de train roulant à réaliser effectivement.
